# EUROPEAN PATENT SPECIFICATION

(11) **EP 2 280 507 B1**
(45) Date of publication and mention of the grant of the patent: **08.01.2014**
(21) Application number: 09360037.7
(22) Date of filing: 30.07.2009
(51) Int. Cl.: H04L 5/00, H04W 52/34

(54) **Power allocation in DC-HSUPA or MC-HSUPA systems**
Leistungszuweisung in DC-HSUPA oder MC-HSUPA Systems
Affectation de puissance dans des systèmes DC-HSUPA ou MC-HSUPA

(43) Date of publication of application: 02.02.2011
(73) Proprietor: Alcatel Lucent, 75007 Paris (FR)
(72) Inventor: Wong, Shin Horng, Chippenham, Wiltshire SN14 0SP (GB)
(74) Representative: Sarup, David Alexander

(56) References cited:
- ERICSSON ET AL: "DC-HSUPA - E-TFC selection system simulation results" 3GPP DRAFT; R1-092762 DC-HSUPA E-TFC SELECTION SYSTEM SIMULATION RESULTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090624, 24 June 2009 (2009-06-24), XP050351218 [retrieved on 2009-06-24]
- HUAWEI: "Consideration on E-TFC selection for DC-HSUPA" 3GPP DRAFT; R2-093154 CONSIDERATION ON E-TFC SELECTION FOR DC-HSUPA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090428, 28 April 2009 (2009-04-28), XP050340871 [retrieved on 2009-04-28]
- QUALCOMM EUROPE: "E-TFC Selection in DC-HSUPA" 3GPP DRAFT; R2-092995 DC_HSUPA_ETFC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090428, 28 April 2009 (2009-04-28), XP050340778 [retrieved on 2009-04-28]
- ALCATEL-LUCENT: "On Greedy Filling Power Allocation in E-TFC Selection for DC-HSUPA" 3GPP DRAFT; DC-HSUPA.3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090817, 17 August 2009 (2009-08-17), XP050352429 [retrieved on 2009-08-17]

## Description

### FIELD OF THE INVENTION

The present invention relates to a method of allocating power to a data channel in a multi-carrier wireless telecommunications network, user equipment operable to carry out the method and a computer program product operable to carry out the method.

### BACKGROUND

Wireless telecommunications systems are known. In a cellular system, radio coverage is provided to user equipment, for example, mobile telephones, by areas known as cells. A base station is located in each cell to provide the radio coverage. User equipment in each cell receives information and data from the base station and transmits information and data to the base station.

Information and data transmitted by the base station to the user equipment occurs on channels of radio carriers known as downlink carriers. Information and data transmitted by user equipment to the base station occurs on uplink data channels of radio carriers known as uplink carriers.

In known single uplink carrier wireless telecommunications systems, user equipment transmits data to the base station in packets. User equipment selects a packet data transport block size to send on a channel of an uplink carrier in accordance with: resource scheduled by the base station to that user equipment and available user equipment data transmission power. User equipment data transmission power is determined by the availability of power after assessment of power pre-allocated to other functions of the user equipment.

It is proposed to allow user equipment to transmit on more than one carrier. User equipment may therefore be required to share limited available user equipment power between carriers to transmit data on those carriers.

Ericsson ET AL: "DC-HSUPA - E-TFC selection system simulation results "3GPP Draft; RI - 092762 DC-HSUPA E-TFC Selection System Simulation Results, 3rd Generation Partnership Project (3GPP), Mobile Competence Centre; 650, Route des Lucioles; F - 06921 SOPHIA-ANTIPOLIS CEDEX; FRANCE, no. Los Angeles, USA; 20090624, 24 June 2009 (2009-06-24), XP050351218 [retrieved on 2009-06-24] describes E-TFC selection in relation to Dual Carrier - High Speed Uplink Packet Access (DC-HSUPA). In particular, the document evaluates the performance of some algontihms in a full buffer scenario specifying the behaviour in the case of power limited user equipment, sequential algorithms relating to greedy water filling, (starting with power allocation to a carrier with smallest DPCCH power), maximum scheduled grant and maximum serving grant.

HUAWEI: "Consideration on E-TFC selection for DC-HSUPA" 3GPP draft; R2-093154 Consideration on E-TFC selection for DC-HSUPA, 3rd Generation partnership project (3GPP), Mobile Competence Centre: 650, Route des Locioles; F-06921 Sophia-Antipolis Cedex; France, no. San Francisco, USA; 20090428, 28 April 2009 (2009-04-28), XP050340871 [retrieved on 2009-04-28] describes simple schemes for E - TFC selection in DH-HSUPA, including: a greedy filling scheme, a transmit pilot power based scheme and a scheduled transmit data power based scheme.

Accordingly, it is desired to provide an improved technique for allocating available power between data uplink channels in a multi-carrier wireless telecommunications network.

### SUMMARY

A first aspect provides a method of allocating power to a data channel in a multi-carrier wireless telecommunications network, each carrier comprising at least one of said data channels, said method comprising the steps of:
determining power allocatable between each of said carriers;
for each carrier:
   receiving an indication representative of an estimated power requirement associated with sending data on said data channel of that carrier;
   receiving an indication representative of an estimated data throughput associated with sending data on said data channel of that carrier;
   generating, from a ratio of the estimated data throughput to the estimated power requirement, a value, for said data channel of that carrier, representative of an estimated potential throughput of data per unit of power allocated to said data channel of that carrier; and
   allocating power to the data channel of each carrier in accordance with a scheduled carrier fill order determined based on a comparison of the generated values, the carrier having the largest generated value being scheduled to be filled first, the carrier having the smallest generated value being scheduled to be filled last, until all power has been allocated.

The first aspect recognises that in a wireless telecommunications network it is possible to increase uplink data throughput by allowing user equipment to transmit in two or more carriers. A wireless telecommunications network allowing for user equipment to transmit on two or more carriers is known as a "multi-carrier" network. In such a multi-carrier wireless telecommunications network it is likely that user equipment will be required to share a single power source between the two or more carriers.

Such multi carrier wireless telecommunications networks may provide two carriers, and may be referred to as a 'Dual Cell High Speed Uplink Packet Access' (DC-HSUPA) network. Networks having more than two carriers may be referred to as 'Multi Cell High Speed Uplink Packet Access' (MC-HSUPA) networks. The term 'multi carrier network' used herein is envisaged to cover both DC-HSUPA and MC-HSUPA networks.

Typically each carrier in a multi carrier network will be independently power controlled. Furthermore, each carrier will typically experience different radio condition and will have different resources scheduled by a base station. The radio condition experienced by a carrier tends to be indicative of any environmental advantages being experienced by a radio signal having that particular carrier frequency. Resources scheduled by a base station to a particular carrier offer some indication of the status of broader conditions being experienced by the wireless telecommunications network on that carrier in a particular cell.

In order for a multi-carrier wireless telecommunications network to function efficiently, it is necessary to consider how best to allocate limited available transmit power amongst carriers. As described previously, the available user equipment transmit power is typically limited.

In particular, it is necessary to try to ensure efficient data throughput from user equipment to the base station is achieved. In arrangements where limited power is available and power demands of all available carriers provided on a piece of user equipment cannot be met, it will be necessary to determine how best to allocate the limited available transmit power between the carriers to achieve efficient data throughput to the base station.

The first aspect is particularly relevant to allocation of available transmit power to physical data uplink channels in a multi carrier wireless telecommunications network.

Allocation of available power in accordance with the method of the first aspect aims to ensure that power is allocated to a carrier in accordance with an estimate of potential throughput of data per unit of power allocated to said data channel of that carrier. Such an approach can improve total data throughput achieved in a cell, or a sector by a base station.

It is possible to allocate available power to each carrier in accordance with a carrier fill order based only on an indication representative of an estimated power requirement associated with sending data on said data channel of that carrier. Such a method assumes that, because the power "cost" of sending data on a data channel of that carrier is low, it is likely to be the best choice of carrier on which to send data to a base station. Such an approach may work well in multi-carrier wireless communication networks in which data traffic is equally balanced across all carriers, but in the event that the network is unbalanced, may lead to an overall drop in data throughput. An unbalanced network is one in which the majority of data traffic in a network cell served by a base station occurs on one carrier. In such a case, many items of user equipment all transmit data to the base station on the data channel of one carrier. As a result, signal to noise ratio on that heavily loaded carrier is likely to drop across the network cell and the potential data throughput associated with sending data to the base station on said data channel of that carrier also drops.

In other words, using a "cost" method does not work well in an unbalanced network because in an unbalanced network, a carrier having the lowest Target Noise Rise (or noise level tolerance) would result in all user equipment needing a low power on that carrier to overcome the noise level. Given a pilot channel (also known as a 'Dedicated Physical Control Channel' or DPCCH) is power controlled to a target Signal to Noise Ratio, and the noise level is low in this carrier, the pilot would need less power for it to get through to a base station. For a carrier with high Target Noise Rise, a pilot needs to transmit at a higher power to get through to the base station. Since the "cost" based method selects the carrier with the lowest pilot power, this carrier (with the lowest Target Noise Rise) will more likely to be selected to be filled first than the other carriers. Giving as much power as possible to first chosen carrier results in that carrier (the one with the lowest Target Noise Rise) being allocated lots of available transmit power. If this is done by all user equipment this would lead to high noise rise at the base station. In order to maintain a low target Noise Rise the base station reduces the "grants" to each user equipment. The "Serving Grant" to each user equipment reduces in order for the base station to maintain its low target Noise Rise. Since "serving grant" represents the throughput, reducing "serving grant" reduces overall cell throughput. Since, in this method, most power is given to the lowest transmit pilot carrier (i.e. likely the one with the lowest target Noise Rise), the other carriers are allocated less power even though they may have a high "serving grant". This results in overall drop in sector throughput

In contrast, an allocation method in accordance with the first aspect recognises that receiving an indication representative of an estimated power requirement associated with sending data on said data channel of that carrier; and receiving an indication representative of an estimated data throughput associated with sending data on said data channel of that carrier; allows the generation of a value, for said data channel of that carrier, representative of an estimated potential throughput of data per unit of power allocated to said data channel of that carrier. That generated value takes into account both power "cost" and the potential data throughput possible on a data channel of a carrier, thereby offering an indication of "value" that may be achieved in allocating some or all of the available power to a particular carrier.

In receiving an indication representative of an estimated power requirement associated with sending data on said data channel of that carrier, it may be that the indication is determined from information previously known, derived, determined or received.

It will be appreciated that the power allocatable between the carriers may not be sufficient to meet the needs of all of the carriers. Taking into account the estimated potential throughput of data per unit of power allocated to the data channel of each carrier aims to ensure that the limited available power is allocated in a way that aims to maximise data throughput.

In one embodiment, each carrier further comprises a pilot channel and the indication representative of an estimated power requirement associated with sending data on the data channel of that carrier is determined from a power level pre-allocated to the pilot channel.

A pilot channel is also known as a 'dedicated physical control channel' or 'DPCCH'. The channels on which data is transmitted are known as 'Enhanced Dedicated Physical Data Channels' or 'E-DPDCH'.

The general operation of the carriers of user equipment are typically controlled by the user equipment based upon information and signals received from a base station. The pilot channel of a carrier acts as a dedicated physical control channel and is necessary to maintain contact between user equipment and a base station. The power allocated to the pilot channel is determined by the user equipment based on information received from the base station. The overall power control between user equipment and a base station to set the pilot channel of a carrier is known as "inner loop" power control. The inner loop power control process determines and pre-allocates a power level, from a user equipment power source, to each carrier independently.

If user equipment is close to the base station, or a carrier is experiencing a particularly advantageous radio transmission environment, the power pre-allocated to the pilot channel of that carrier will typically be relatively low. The power allocated to other channels provided on a carrier are typically controlled in relation to the pilot channel. It will thus be understood that the power level pre-allocated to the pilot channel by the inner loop power control process is likely to be representative of an estimated power requirement associated with sending data on the data channel of that carrier. That is to say, if a low power has been pre-allocated to the pilot channel of a carrier, a low power is required to maintain contact between that carrier and a base station. As a consequence, it is likely that carrier is experiencing an advantageous radio transmission environment and therefore that the power required to send data on that carrier will also be low.

In one embodiment, the indication representative of an estimated data throughput associated with sending data on the data channel of that carrier comprises an indication of a potential data transport block size transmittable on the data channel.

A rate at which a data channel is allowed to send packets of data to a base station from user equipment is typically pre-set in a wireless telecommunications network. A large potential data transport block size is thus indicative of a large data throughput from user equipment to the base station.

In one embodiment, the indication representative of an estimated data throughput associated with sending data on the data channel of that carrier comprises an indication of signal to noise ratio experienced on that carrier by the wireless telecommunications network.

The signal to noise ratio being experienced by a carrier is indicative of a potential data loss rate on a data channel of that carrier. A large signal to noise ratio indicates that the potential data loss rate on a carrier is low. It is therefore likely that the data throughput on a data channel of that carrier will be high.

In one embodiment, the step of receiving an indication of a potential data transport block size transmittable on the data channel comprises the step of:
receiving an indication of maximum potential data throughput associated with sending data on the data channel of that carrier.

In a wireless telecommunications network a base station typically communicates with user equipment. The base station transmits an indication of the resource scheduled to each carrier of user equipment. Scheduled resource is usually expressed as a "grant" or "serving grant" for each carrier. A serving grant is calculated as a ratio of maximum allowed transmit power on a data channel of a carrier to the power level pre-allocated to the pilot channel of that carrier by the inner loop power control process. The serving grant therefore offers an indication of maximum potential data throughput associated with sending data on the data channel of a carrier. By multiplying the serving grant by the pre-allocated power level to the pilot channel of that channel it is possible to calculate the power allocation required to meet the maximum potential data throughput on the data channel of that carrier.

In one embodiment, the step of receiving an indication of a potential data transport block size transmittable on the data channel comprises the steps of:
receiving an indication of maximum potential data throughput associated with sending data on the data channel of that carrier;
calculating an estimated power allocation required to meet the estimated maximum potential data throughput on the data channel of that carrier; and
determining the extent to which the calculated estimated power allocation required to meet the estimated maximum potential data throughput can be filled by the power allocatable between each of the carriers.

As described above, in a wireless telecommunications network it is possible to calculate an indication of power required to meet the maximum potential data throughput associated with sending data on the data channel of each carrier from information regarding the serving grant issued to user equipment by a base station. Since the allocatable power of user equipment is limited, it may be that the allocatable power cannot meet the power required to meet the maximum potential data throughput on a data channel of a particular carrier, even if no further carriers were present. Calculation of the extent to which the calculated estimated power allocation required to meet the estimated maximum potential data throughput can be filled by the power allocatable between each of the carriers allows a more realistic indication representative of an estimated data throughput associated with sending data on said data channel of that carrier to be calculated. In turn, this allows a more realistic representation of estimated potential throughput of data per unit of power allocated to a data channel of that carrier to be generated.

In one embodiment, allocation of power to the data channel of each carrier in accordance with a scheduled carrier fill order is pseudorandom between those carriers for which the generated values are identical.

Arranging for the carrier fill order to be pseudorandom in the instance that generated values are identical can help to ensure that one carrier of the carriers provided in a wireless telecommunication network does not become unnecessarily loaded.

In one embodiment, the steps of the method of the first aspect are periodically repeated. The repetition period may be pseudorandom. The repetition may occur whenever it is required to transmit data on the data channels of the carriers. The method may be constantly repeated or may be repeated whenever there is data to be transmitted.

A second aspect provides user equipment operable to allocate power to a data channel in a multi-carrier wireless telecommunications network, each carrier comprising at least one of said data channels, said user equipment comprising:
a source of power allocatable between each of said carriers;
monitoring logic operable to receive an indication representative of an estimated power requirement associated with sending data on said data channel of each carrier;
monitoring logic operable to receive an indication representative of an estimated data throughput associated with sending data on said data channel of each carrier;
calculation logic operable to generate, from a ratio of the estimated data throughput to the estimated power requirement, a value, for said data channel of each carrier, representative of an estimated potential throughput of data per unit of power allocated to said data channel of each carrier; and
implementation logic operable to allocate power to the data channel of each carrier in accordance with a scheduled carrier fill order determined based on a comparison of the generated values, the carrier having the largest generated value being scheduled to be filled first, the carrier having the smallest generated value being scheduled to be filled last, until all power has been allocated.

In one embodiment, each carrier further comprises a pilot channel and the monitoring logic is operable to receive an indication representative of a power level pre-allocated to the pilot channel of each carrier.

In one embodiment, the monitoring logic is operable to receive an indication of a potential data transport block size transmittable on the data channel of each carrier.

In one embodiment, the monitoring logic is operable to receive an indication of signal to noise ratio experienced on each carrier by the wireless telecommunications network.

In one embodiment, the monitoring logic is operable to receive an indication of maximum potential data throughput associated with sending data on the data channel of each carrier and the user equipment further comprises additional calculation logic operable to calculate a power allocation necessary to meet the maximum potential data throughput associated with sending data on the data channel of each carrier.

In one embodiment, the monitoring logic is operable to receive an indication of maximum potential data throughput associated with sending data on the data channel of each carrier and the user equipment further comprises additional calculation logic operable to:
calculate a power allocation necessary to meet the maximum potential data throughput associated with sending data on the data channel of each carrier, determine the extent to which the calculated estimated power allocation required to meet the estimated maximum potential data throughput can be filled by the power allocatable between each of the carriers.

In one embodiment, the implementation logic is further operable to allocate power to the data channel of each carrier pseudorandom between those carriers for which the generated values are identical.

In one embodiment, the user equipment further comprises repetition logic operable to repeat the steps of the method of the first aspect periodically. The period may be pseudorandom. The repetition logic may be triggered whenever it is required to transmit data on the data channels of the carriers. The method may be constantly repeated.

A third aspect provides a base station operable to allocate power to a data channel in a multi-carrier wireless telecommunications network, each carrier comprising at least one of said data channels, said base station comprising:
a source of power allocatable between each of said carriers;
monitoring logic operable to receive an indication representative of an estimated power requirement associated with sending data on said data channel of each carrier;
monitoring logic operable to receive an indication representative of an estimated data throughput associated with sending data on said data channel of each carrier;
calculation logic operable to generate, from a ratio of the estimated data throughput to the estimated power requirement, a value, for said data channel of each carrier, representative of an estimated potential throughput of data per unit of power allocated to said data channel of each carrier, and
implementation logic operable to allocate power to the data channel of each carrier in accordance with a scheduled carrier fill order determined based on a comparison of the generated values, the carrier having the largest generated value being scheduled to be filled first, the carrier having the smallest generated value being scheduled to be filled last, until all power has been allocated.

In one embodiment, each carrier further comprises a pilot channel and the monitoring logic is operable to receive an indication representative of a power level pre-allocated to the pilot channel of each carrier.

In one embodiment, the monitoring logic is operable to receive an indication of a potential data transport block size transmittable on the data channel of each carrier.

In one embodiment, the monitoring logic is operable to receive an indication of signal to noise ratio experienced on each carrier by the wireless telecommunications network.

In one embodiment, the monitoring logic is operable to receive an indication of maximum potential data throughput associated with sending data on the data channel of each carrier and the base station further comprises additional calculation logic operable to calculate a power allocation necessary to meet the maximum potential data throughput associated with sending data on the data channel of each carrier.

In one embodiment, the monitoring logic is operable to receive an indication of maximum potential data throughput associated with sending data on the data channel of each carrier and the base station further comprises additional calculation logic operable to:
calculate a power allocation necessary to meet the maximum potential data throughput associated with sending data on the data channel of each carrier, determine the extent to which the calculated estimated power allocation required to meet the estimated maximum potential data throughput can be filled by the power allocatable between each of the carriers.

In one embodiment, the implementation logic is further operable to allocate power to the data channel of each carrier pseudorandom between those carriers for which the generated values are identical.

In one embodiment, the base station further comprises repetition logic operable to repeat the steps of the method of the first aspect periodically. The period may be pseudorandom. The repetition logic may be triggered whenever it is required to transmit data on the data channels of the carriers. The method may be constantly repeated.

A fourth aspect provides a computer program product, operable when executed on a computer, to perform the method steps of the first aspect.

Further particular and preferred aspects are set out in the accompanying independent and dependent claims. Features of the dependent claims may be combined with the features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 illustrates the main components of a telecommunications network according to one embodiment;
Figure 2 is a schematic representation of the main processing steps for establishment of data transmission between user equipment and a base station on an uplink data channel in a multi-carrier wireless telecommunications network;
Figure 3 is a flowchart showing schematically the main processing steps for allocating power to a data channel in a multi-carrier wireless telecommunications network in accordance with one aspect.
Figure 4 is a schematic representation of a user equipment including logic operable to carry out a method of allocating power to a data channel in a multi-carrier wireless telecommunications network in accordance with one aspect;
Figure 5 is an illustrated example of a method of allocating power to a data channel in a multi-carrier wireless telecommunications network in accordance with the method of the first aspect; and
Figure 6 is a second illustrated example of a method of allocating power to a data channel in a multi-carrier wireless telecommunications network in accordance with the method of the first aspect.

### DESCRIPTION OF THE EMBODIMENTS

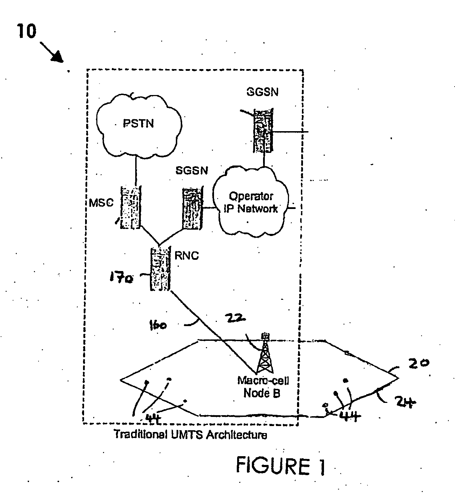

Figure 1 illustrates a wireless communication system, generally 10, according to one embodiment. User equipment 44 roam through the wireless communication system 10. Base stations 22 are provided which support respective macro cells 24. A number of such base stations are provided, which are distributed geographically in order to provide a wide area of coverage to the user equipment 44. When user equipment 44 is within a macro cell 24 supported by the base station 22 then communications may be established between the user equipment 44 and the base station 22 over an associated radio link. Each base station typically supports a number of sectors.

Typically, a different antenna within a base station supports an associated sector. Accordingly, each base station has multiple antennas and signals sent through the different antennas are electronically weighted to provide a sectorised approach. Of course, it will be appreciated that Figure 1 illustrates a small subset of the total number of user equipment and base stations that may be present in a typical communications system.

The wireless communication system 10 is managed by a radio network controller 170. The radio network controller 170 controls the operation of the wireless communications system 10 by communicating with the base stations 22 over a backhaul communications link 160. The network controller 170 also communicates with the user equipment 44 via their respective radio links in order to efficiently manage the wireless communication system 10.

The radio network controller 170 maintains a neighbour list which includes information about the geographical relationship between cells supported by base stations. In addition, the radio network controller 170 maintains location information which provides information on the location of the user equipment within the wireless communications system 10. The radio network controller 170 is operable to route traffic via circuit-switched and packet-switched networks. Hence, a mobile switching centre 250 is provided with which the radio network controller 170 may communicate. The mobile switching centre 250 then communicates with a circuit-switched network such as a public switched telephone network (PSTN) 210. Likewise, the network controller 170 communicates with service general packet radio service support nodes (SGSNs) 220 and a gateway general packet radio support node (GGSN) 180. The GGSN then communicates with a packet-switch core 190 such as, for example, the Internet.

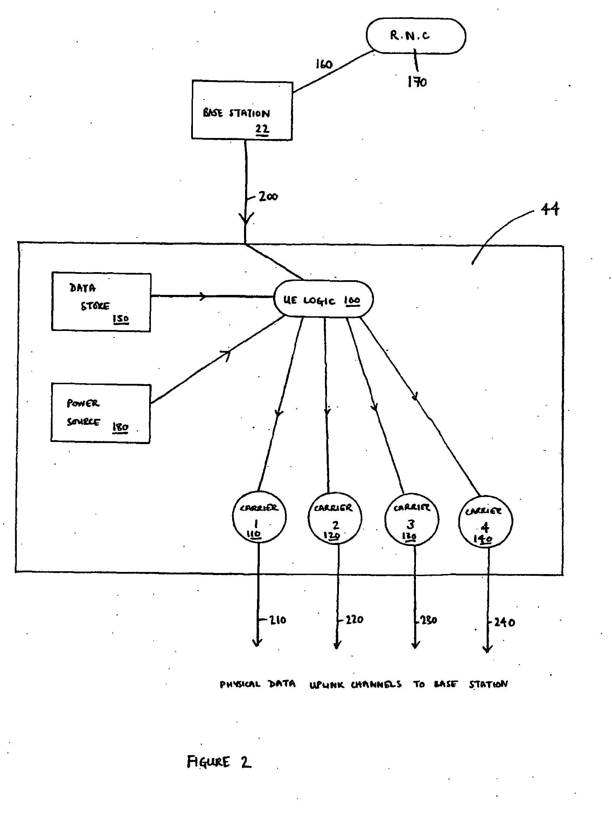

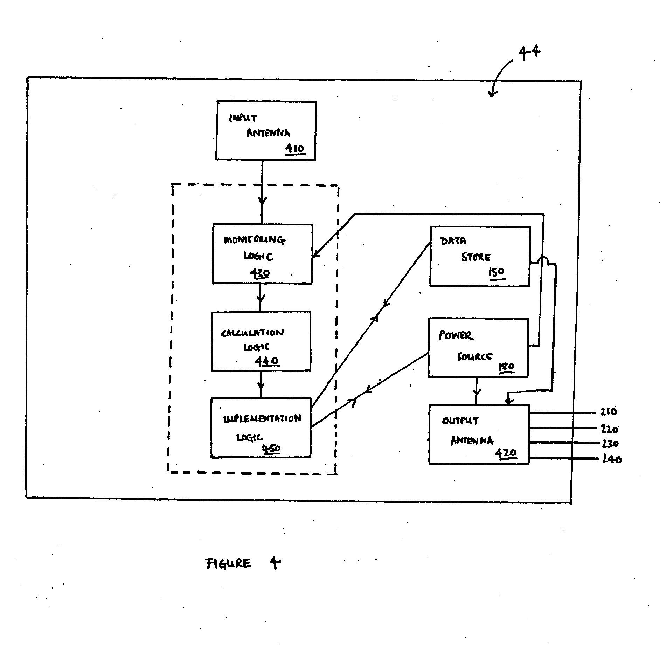

Figure 2 shows in more detail a schematic representation of the main processing steps between user equipment 44 and a base station 22 for establishment of data transmission on an uplink data channel in a multi-carrier wireless telecommunications network. The user equipment 44 comprises generally: controller logic 100; four carriers 110, 120, 130 and 140; a data store 150; and a power source 180. The controller logic 100 is described in more detail below in relation to Figure 4.

Each carrier 110, 120, 130, 140 comprises a number of channels including a pilot channel and a physical data channel. The physical data channel of each carrier is used to transmit data to the base station 22.

The data store 150 contains data to be sent to the base station 22 on the physical data channels of each of the carriers. The power source 180 supplies power to allow the user equipment 44 to function. A portion of power available from the power source 180 is allocatable to the carriers for transmission of data on their data channels. Uplink data channels 210, 220, 230, 240 allow data to be transmitted from user equipment 44 to the base station 22.

As described. above, the radio network controller 170 controls the operation of the wireless communications system 10 by communicating with the base station 22 over a backhaul communications link 160. The network controller 170 also communicates indirectly with the user equipment 44 via a radio link 200 from the base station 22. The base station thus cooperates with the network controller and user equipment in order to efficiently manage the wireless communication system 10.

The general, operation of the carriers 110, 120, 130, 140 of user equipment 44 is controlled by the user equipment controller logic 100 based upon information and signals received from base station 22. The pilot channel of each carrier acts as a dedicated physical control channel and is necessary to maintain contact between user equipment 44 and base station 22. The power allocated to the pilot channel of each carrier is determined by the user equipment controller logic 100 based on information received from the base station via radio link 200. The control process between user equipment 44 and a base station 22 sets the level of overall power allocated to the pilot channel of each carrier is known as "inner loop" power control. The inner loop power control pre-allocates power from power source 180 to each carrier. The power level pre-allocated to each carrier occurs independently. That is to say, the power pre-allocated to each carrier is independent from the power pre-allocated to each other carrier.

"Outer Loop" power control operates at the RNC 170 and acts to set a target Signal to Noise Ratio. The inner loop power control tries to maintain the target Signal to Noise Ratio set by the outer loop power control.

If user equipment 44 is close to the base station, or a carrier is experiencing a particularly advantageous radio transmission environment, the power pre-allocated to the pilot channel of that carrier will typically be quite low. The power allocated to all other channels provided on a carrier, including the uplink data channel are typically controlled in relation to the pilot channel. If a low power has been pre-allocated to the pilot channel of a carrier, a low power is required to maintain contact between that carrier and a base station. It will thus be understood that the power level pre-allocated to the pilot channel by the inner loop power control process is likely to be representative of an estimated power requirement associated with sending data on the data channel of that carrier.

The base station 22 also communicates with user equipment 44 to indicate how much resource is scheduled to each carrier. The base station 22 transmits, over radio link 200, a signal indicative of the resource scheduled to each carrier of the user equipment. That signal is received and processed by controller logic 100. Scheduled resource is usually expressed as a "serving grant" for each carrier. A serving grant is calculated as a ratio of maximum allowed transmit power on a data channel of a carrier to the power level pre-allocated to the pilot channel of that carrier by the inner loop power control process. The serving grant therefore offers an indication of maximum potential data throughput associated with sending data on the data channel of a carrier. By multiplying the serving grant of a channel by the pre-allocated power level to the pilot channel of that channel it is possible to calculate the power allocation required to meet the maximum potential data throughput on the data channel of that carrier.

It can be seen from Figure 2 that the controller logic 100 receives signals from base station 22, data store 150 and power source 180. The controller logic processes the information received from those sources and controls operation of each of the carriers 110, 120, 130, 140 in accordance with that information. In particular, the controller logic 100 is operable to allocate power to the data channels of the carriers in accordance with a method in accordance with a first aspect such that power can be allocated to transmit data on uplink data channels 210, 220, 230, 240.

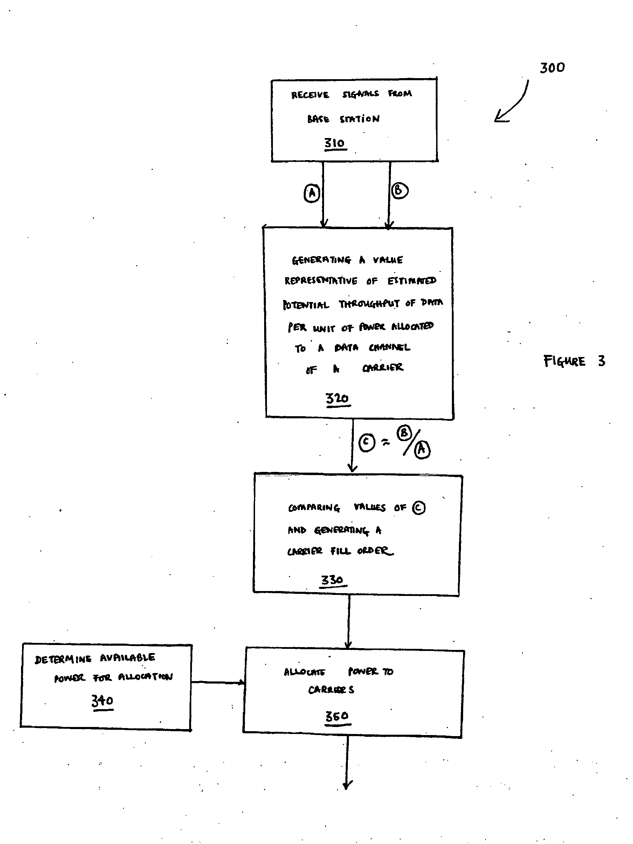

Figure 3 is a flowchart showing schematically the main processing steps 300 for allocating power to a data channel in a multi-carrier wireless telecommunications network in accordance with one aspect. The process comprises the step 310 of receiving, for each carrier in a multi-carrier network, at least two signals, from a base station. The first signal can be used to generate a value A, which comprises an indication an representative of an estimated power requirement associated with sending data on a data channel of that carrier. The second signal can be used to generate a value B, which comprises an indication representative of an estimated data throughput associated with sending data on said data channel of that carrier.

The process further comprises the step, 320, of generating a value C. C is representative of an estimated potential throughput of data per unit of power allocated to said data channel of that carrier and is generated at step 320 by calculating a ratio given by value B divided by value A.

The value C is calculated for each carrier in a multi-carrier network. The processing step 330 comprises the step of comparing the value of C for each carrier and generating a carrier fill order based on that comparison of the generated values. The carrier having the largest generated value is scheduled to be filled first, the carrier having the smallest generated value is scheduled to be filled last.

The method further comprises a processing step 340, in which allocatable power is determined.

Given the determined allocatable power and the generated carrier fill order, the method further comprises a step 350 of allocating power to the data channel of each carrier in accordance with the scheduled fill order until all available power has been allocated.

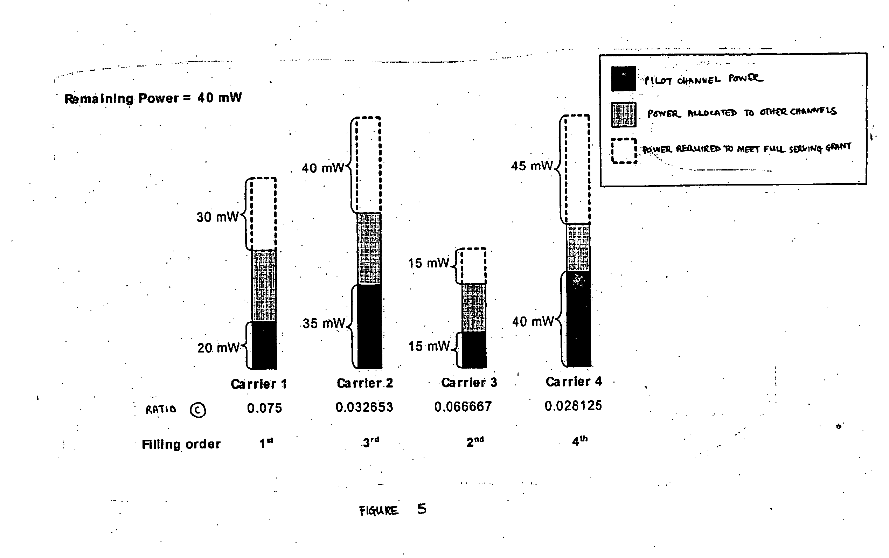

In one embodiment of a method in accordance with the first aspect, the processing steps of Figure 3 are carried out by controlling logic 100 of user equipment 44, shown in more detail in Figures 2 and 4. A worked example of this embodiment is shown in Figure 5.

In this first embodiment, for each carrier supported by user equipment 44, base station 22 transmits two signals of relevance to power allocation to data channels of the carrier: Those signals comprise a signal setting the transmit power of a pilot channel on that carrier and an indication of resource scheduled by the base station 22 to that carrier. The scheduled resource signal is typically referred to as a "serving grant", which is the ratio of the maximum allowed transmit power on the user equipment physical data channel on that carrier over the pre-set transmit power of the pilot channel on that carrier.

As described above, the pre-set power level allocated to the pilot channel of each channel is used to determine the power settings of all other channels provided on that carrier.

In this first embodiment, value A comprises the pre-set power level allocated to the pilot channel of each carrier. The pilot channel power is representative of an estimated power requirement associated with sending data on said data channel of that carrier since the pilot channel power is indicative of radio condition experienced by that carrier and any environmental advantages being experienced by a radio signal having that particular carrier frequency. Resources scheduled by a base station to a particular carrier offer some indication of the status of broader conditions being experienced by the wireless telecommunications network on that carrier in a particular cell.

Value B is calculated from the signal representative of serving grant, and comprises a value indicative of the serving grant for that carrier. Since serving grant is calculated as a ratio of maximum allowed transmit power on a data channel of a carrier to the power level pre-allocated to the pilot channel of that carrier by the inner loop power control process, it offers an indication of maximum potential data throughput associated with sending data an the data channel of a carrier.

In this first embodiment, value C generated at step 320 is indicative of an estimated maximum potential throughput of data per unit of power allocated to said data channel of that carrier.

The controller logic 100 receives an indication, from power source 180 of power available for allocation between the data channels of the carriers.

Allocatable power is then divided between the carriers in accordance with process step 350.

This first embodiment employs a "greedy filling" scheme in which the filling order is calculated from a ratio of power required to meet the serving grant over the pilot channel transmit power. The scheme will fill up as much power as allowed on the carrier with the largest ratio followed by the carrier with the next largest calculated ratio. The fill process is continued either until no remaining allocatable power is left or until power requirement of the data channels on all carriers is met.

This first embodiment aims to give most power to the carrier with the largest serving grant yet have the lowest power cost, since the largest ratio of serving grant to pilot channel power may not correlate to the carrier with the lowest pilot channel power. The solution of the first embodiment has been shown to avoid overloading the carrier with the lowest interference tolerance in a wireless telecommunications network having unbalanced load between carriers. This has been found to optimise uplink sector data throughput.

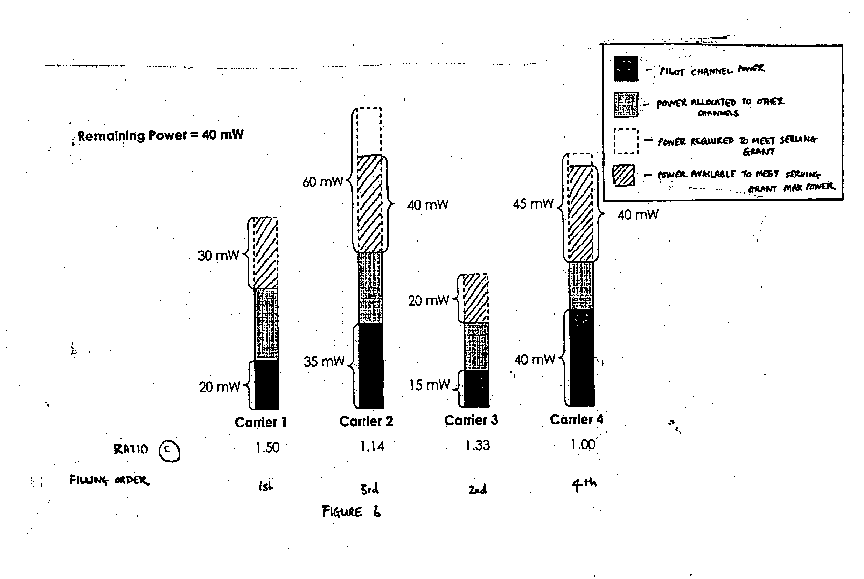

In a second embodiment of a method in accordance with the first aspect, the processing steps of Figure 3 are carried out by controlling logic 100 of user equipment 44, shown in more detail in Figures 2 and 4. A worked example of this second embodiment is shown in Figure 6.

In this second embodiment, for each carrier supported by user equipment 44, base station 22 transmits two signals of relevance to power allocation to data channels of the carrier: those signals comprise a signal setting the transmit power of a pilot channel on that carrier and an indication of resource scheduled by the base station 22 to that carrier. The scheduled resource signal is typically referred to as a "serving grant", which is the ratio of the maximum allowed transmit power on the user equipment physical data channel on that carrier over the pre-set transmit power of the pilot channel on that carrier.

As described above, the pre-set power level allocated to the pilot channel of each channel is used to determine the power settings of all other channels provided on that carrier.

In the second embodiment, just as in the first embodiment, value A comprises the pre-set power level allocated to the pilot channel of each carrier. The pilot channel power is representative of an estimated power requirement associated with sending data on said data channel of that carrier since the pilot channel power is indicative of radio condition experienced by that carrier and any environmental advantages being experienced by a radio signal having that particular carrier frequency. Resources scheduled by a base station to a particular carrier offer some indication of the status of broader conditions being experienced by the wireless telecommunications network on that carrier in a particular cell.

In the second embodiment, value B is calculated differently from the value of B used in the first embodiment. The signal representative of serving grant is also used in this calculation. The second embodiment recognizes that since the allocatable power (determined at step 340) of user equipment is limited, it may be that the allocatable power cannot meet the power required to meet the maximum potential data throughput on a data channel of a particular carrier, even if no further carriers were present.

As described above, it is possible to calculate an indication of power required to meet the maximum potential data throughput associated with sending data on the data channel of each carrier from information regarding the serving grant issued to user equipment by a base station. Since serving grant is calculated as a ratio of maximum allowed transmit power on a data channel of a carrier to the power level pre-allocated to the pilot channel of that carrier by the inner loop power control process, it offers an indication of maximum potential data throughput associated with sending data on the data channel of a carrier. By multiplying the serving grant by the pre-allocated power level to the pilot channel of that channel it is possible to calculate the power allocation required to meet the maximum potential data throughput on the data channel of that carrier. The second embodiment further comprises a step of calculating of the extent to which the calculated estimated power allocation required to meet the estimated maximum potential data throughput can be filled by the available power allocatable between each of the carriers. Such a calculation of value B allows a more realistic indication representative of an estimated data throughput associated with sending data on said data channel of that carrier to be calculated. In turn, this allows a more realistic representation of estimated potential throughput of data per unit of power allocated to a data channel of that carrier to be generated.

In this second embodiment, value B represents the extent to which power allocation required to meet maximum potential data throughput can be filled by available allocatable power. That is to say, the available power (determined at step 340) is taken into account to generate value B.

In this second embodiment, the value C generated at step 320 is indicative of a "real" estimated throughput of data per unit of power allocated to said data channel of that carrier.

Allocatable power is then divided between the carriers in accordance with process step 350.

This second embodiment also employs a "greedy filling" scheme. In the second embodiment, the filling order is calculated from a ratio the extent to which power is available to meet the serving grant over the pilot channel transmit power. The scheme will fill up as much power as allowed on the carrier with the largest ratio followed by the carrier with the next largest calculated ratio. The fill process is continued either until no remaining power is left or until power requirement of the data channels on all carriers is met.

By taking the serving grant and the extent to which the power requirement necessary to meet the serving grant can be met into account it has been found that overloading the carrier with the lowest interference tolerance can be avoided in a network with unbalanced load between the carriers. This has been found to optimize uplink sector data throughput.

Figure 4 is a schematic representation of user equipment 44 including controlling logic 100 operable to carry out a method of allocating power to a data channel in a multi-carrier wireless telecommunications network in accordance with one aspect. Although the following description relates to implementing a method of allocating power to a data channel in a multi-carrier wireless telecommunications network in user equipment, it can be appreciated that this technique has application to other network nodes such as, for example, base stations.

User equipment 44 comprises generally: a power source 180, a data store 150, input antenna 410 operable to receive signals from base station 22, output antenna 420 operable to transmit signals to the base station on uplink data channels of 210, 220, 230, 240, of carriers 110, 120, 130, 140 and controller logic 100 operable to perform the process shown and described in Figure 3.

Controller logic 100 further comprises monitoring logic 430, calculation logic 440 and implementation logic 450.

Monitoring logic 430 is operable to receive input signals from the input antenna 410 and power source 180. Monitoring logic 430 is operable to perform steps 310 and 340 of Figure 3.

Calculation logic 440 is operable to calculate values A, B and C as described in relation to Figure 3. Calculation logic is operable to perform steps 320 and 330 of Figure 3.

Implementation logic 450 is operable to receive signals from calculation logic 440 and data store 150. Implementation logic is also operable to transmit signals to power source 180, data store 150 and output antenna 420. Implementation logic 450 is operable to perform step 350 of Figure 3 and assign data to be transmitted on uplink data channels 210, 220, 230, 240 in accordance with the determined scheduled fill order.

Figure 5 is an illustrated example of a method of allocating power to a data channel in a multi-carrier wireless telecommunications network in accordance with a method of the first aspect.

Figure 5 is an example of a 4 carrier Multi Carrier High Speed Uplink Packet Access Wireless telecommunications network. After inner loop power control on the pilot channels and power allocation for non-physical data channels on each carrier, the remaining power left for physical data uplink at the user equipment example shown is 40 mW. A power and data selection process is required to allocate that 40 mW amongst the 4 carriers.

The pilot channel transmit power on each carrier is:
- Carrier 1 = 20 mW
- Carrier 2 = 35 mW
- Carrier 3 = 15 mW
- Carrier 4 = 40 mW

The serving grant for each carrier is:
- Carrier 1 = 1.50
- Carrier 2 = 1.142857
- Carrier 3 = 1.00
- Carrier 4 = 1.125

The serving grant/pilot channel transmit power ratio is thus:
- Carrier 1 = 0.075
- Carrier 2 = 0.032653
- Carrier 3 = 0.066667
- Carrier 4 = 0.028125

The filling order in accordance with this first embodiment is thus:
1. Carrier 1
2. Carrier 3
3. Carrier 2
4. Carrier 4

The 40 mW of available allocatable power is hence allocated as follows:
- Carrier 1 gets 30 mW
- Carrier 2 gets 0 mW
- Carrier 3 gets 10 mW
- Carrier 4 gets 0 mW

It can be seen that in this example the allocation method avoids allocation of all the power to the carrier with the lowest pre-allocated pilot power.

Figure 6 is a second illustrated example of a method of allocating power to a data channel in a multi-carrier wireless telecommunications network in accordance with a method of the first aspect.

Figure 6 is a second example of a 4 carrier Multi Carrier High Speed Uplink Packet Access Wireless Telecommunications network system. After inner loop power control on the pilot channel and power allocation for non-physical data channels on each carrier, the remaining power left for physical data uplink at the user equipment of this example is 40 mW. A power and data selection process is required to allocate that 40 mW amongst the 4 carriers. The pilot channel transmit power on each carrier is:
- Carrier 1 = 20 mW
- Carrier 2 = 35 mW
- Carrier 3 = 15 mW
- Carrier 4 = 40 mW

The extent to which the power required to meet the full serving grant can be met by available allocatable power (in this case 40mW is available) maximum potential is then calculated for each carrier. The calculated ratio for each carrier is:
- Carrier 1 = 1.5
- Carrier 2=1.14
- Carrier 3 = 1.33
- Carrier 4 = 1.00

The filling order is thus:
1. Carrier 1
2. Carrier 3
3. Carrier 2
4. Carrier 4

The 40mW of available allocatable power is hence allocated as follows. In this allocatable example no allocatable power is left after filling up Carrier 3.
- Carrier 1 gets 30 mW
- Carrier 2 gets 0 mW
- Carrier 3 gets 10 mW
- Carrier 4 gets 0 mW

It can be seen that in this example the allocation method avoids allocation of all the power to the carrier with the lowest pre-allocatable pilot power.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of allocating power to a data channel (210, 220, 230, 240) in a multi-carrier wireless telecommunications network, each carrier (110, 120, 130, 140) comprising at least one of said data channels, said method comprising the steps of:
determining power allocatable between each of said carriers (110, 120, 130, 140);
for each carrier:
receiving (310) an indication representative of an estimated power requirement associated with sending data on said data channel of that carrier;
receiving an indication representative of an estimated data throughput associated with sending data on said data channel of that carrier;
generating (320), from a ratio of the estimated data throughput to the estimated power requirement, a value, for said data channel of that carrier, representative of an estimated potential throughput of data per unit of power allocated to said data channel of that carrier, and
allocating power (350) to the data channel of each carrier in accordance with a scheduled carrier fill order determined based on a comparison (330) of the generated values, the carrier having the largest generated value being scheduled to be filled first, the carrier having the smallest generated value being scheduled to be filled last, until all power has been allocated.

2. A method according to claim 1, wherein each carrier (110, 120, 130, 140) further comprises a pilot channel and the indication representative of an estimated power requirement associated with sending data on said data channel (210, 220, 230, 240) of that carrier is determined from a power level pre-allocated to said pilot channel.

3. A method according to claim 1 or claim 2, wherein the indication representative of an estimated data throughput associated with sending data on said data channel (210, 220, 230, 240) of that carrier (110, 120, 130, 140) comprises an indication of a potential data transport block size transmittable on said data channel (210, 220, 230, 240).

4. A method according to claim 1 or claim 2, wherein the indication representative of an estimated data throughput associated with sending data on said data channel (210, 220, 230, 240) of that carrier (110, 120, 130, 140) comprises an indication of signal to noise ratio experienced on that carrier (110, 120, 130, 140) by said wireless telecommunications network.

5. A method according to claim 3, wherein the step of receiving an indication of a potential data transport block size transmittable on said data channel (210, 220, 230, 240) comprises the step of:
receiving an indication of maximum potential data throughput associated with sending data on said data channel (210, 220, 230, 240) of that carrier (110, 120, 130, 140).

6. A method according to claim 5, wherein the step of receiving an indication of a potential data transport block size transmittable on said data channel comprises the steps of:
receiving an indication of maximum potential data throughput associated with sending data on said data channel (210, 220, 230, 240) of that carrier 110, 120, 130, 140), calculating an estimated power allocation required to meet the estimated maximum potential data throughput on said data channel (110, 120, 130, 140) of that carrier, and
determining the extent to which the calculated estimated power allocation required to meet the estimated maximum potential data throughput can be filled by the power allocatable between each of said carriers (110, 120, 130,140).

7. A method according to any preceding claim, wherein allocating power to the data channel (210, 220, 230, 240) of each carrier (110, 120, 130, 140) in accordance with a scheduled carrier fill order is pseudorandom between those carriers (110, 120, 130, 140) for which the generated values are identical.

8. A method according to any preceding claim, wherein the steps are periodically repeated.

9. A method according to claim 8, wherein said period is pseudorandom.

10. User equipment (44) operable to allocate power to a data channel (210, 220, 230, 240) in a multi-carrier wireless telecommunications network, each carrier (110, 120, 130, 140) comprising at least one of said data channels (210, 220, 230, 240), said user equipment comprising:
a source of power (180) allocatable between each of said carriers;
monitoring logic (430) operable to receive an indication representative of an estimated power requirement associated with sending data on said data channel of
each carrier; monitoring logic (430) operable to receive an indication representative of an estimated data throughput associated with sending data on said data channel of each carrier;
calculation logic (440) operable to generate, from a ratio of the estimated data throughput to the estimated power requirement, a value, for said data channel of each carrier, representative of an estimated potential throughput of data per unit of power allocated to said data channel of each carrier, and
implementation logic (450) operable to allocate power to the data channel of each carrier in accordance with a scheduled carrier fill order determined based on a comparison of the generated values, the carrier (110, 120, 130, 140) having the largest generated value being scheduled to be filled first, the carrier having the smallest generated value being scheduled to be filled last, until all power has been allocated.

11. A base station (22) operable to allocate power to a data channel (210, 220, 230, 240) in a multi-carrier wireless telecommunications network, each carrier (110,120,130,140) comprising at least one of said data channels, said base station (22) comprising:
a source of power allocatable between each of said carriers;
monitoring logic operable to receive an indication representative of an estimated power requirement associated with sending data on said data channel of each carrier;
monitoring logic operable to receive an indication representative of an estimated data throughput associated with sending data on said data channel of each carrier;
calculation logic operable to generate, from a ratio of the estimated data throughput to the estimated power requirement, a value, for said data channel of each carrier, representative of an estimated potential throughput of data per unit of power allocated to said data channel of each carrier, and
implementation logic operable to allocate power to the data channel of each carrier in accordance with a scheduled carrier fill order determined based on a comparison of the generated values, the carrier having the largest generated value being scheduled to be filled first, the carrier having the smallest generated value being scheduled to be filled last, until all power has been allocated.

12. A computer program product, operable when executed on a computer, to perform the method steps of any of claims 1 to 9.

## Patentansprüche

1. Verfahren zur Zuweisung von Leistung an einen Datenkanal (210, 220, 230, 240) in einem drahtlosen Mehrträger-Telekommunikationsnetzwerk, wobei jeder Träger (110, 120, 130, 140) mindestens einen der besagten Datenkanäle umfasst, wobei das Verfahren die folgenden Schritte umfasst:
Ermitteln von Leistung, die zwischen jedem der besagten Träger (10, 120, 130, 140) zugewiesen werden kann;
für jeden Träger:
Empfangen (310) einer Angabe, welche für einen mit dem Senden von Daten auf dem besagten Datenkanal dieses Trägers assoziierten geschätzten Leistungsbedarf repräsentativ ist;
Empfangen einer Angabe, welche für einen mit dem Senden von Daten auf dem besagten Datenkanal dieses Trägers assoziierten geschätzten Datendurchsatz repräsentativ ist;
Erzeugen (320), ausgehend von einem Verhältnis des geschätzten Datendurchsatzes zu dem geschätzten Leistungsbedarf, eines Wertes für den besagten Datenkanal dieses Trägers, welcher für einen geschätzten potenziellen Durchsatz von Daten pro Einheit der dem besagten Datenkanal dieses Trägers zugewiesenen Leistung repräsentativ ist, und
Zuweisen von Leistung (350) an den Datenkanal eines jeden Trägers gemäß einer geplanten Trägerfüllreihenfolge, welche auf der Basis eines Vergleichs (330) der erzeugten Werte bestimmt wird, wobei der Träger mit dem größten erzeugten Wert zuerst für das Füllen geplant wird und der Träger mit dem kleinesten erzeugten Wert zuletzt für das Füllen geplant wird, bis die gesamte Leistung zugewiesen worden ist.

2. Verfahren nach Anspruch 1, wobei jeder Träger (110, 120, 130, 140) weiterhin einen Pilotkanal umfasst, und wobei die Angabe, welche für einen mit dem Senden von Daten auf dem besagten Datenkanal (210, 220, 230, 240) dieses Trägers assoziierten geschätzten Leistungsbedarf repräsentativ ist, ausgehend von einem dem besagten Pilotkanal vorab zugewiesenen Leistungspegel bestimmt wird.

3. Verfahren nach Anspruch 1 oder Anspruch 2, wobei die Angabe, welche für einen mit dem Senden von Daten auf dem besagten Datenkanal (210, 220, 230, 240) dieses Trägers (110, 120, 130, 140) assoziierten geschätzten Datendurchsatz repräsentativ ist, eine Angabe über eine potenzielle Größe eines auf dem besagten Datenkanal (210, 220, 230, 240) übertragbaren Datentransportblocks umfasst.

4. Verfahren nach Anspruch 1 oder Anspruch 2, wobei die Angabe, welche für einen mit dem Senden von Daten auf dem besagten Datenkanal (210, 220, 230, 240) dieses Trägers (110, 120, 130, 140) assoziierten geschätzten Datendurchsatz repräsentativ ist, eine Angabe über das auf diesem Träger (110, 120, 130, 140) durch das besagte drahtlose Telekommunikationsnetzwerk verursachte Signal-Rausch-Verhältnisses umfasst.

5. Verfahren nach Anspruch 3, wobei der Schritt des Empfangens einer Angabe über die potenzielle Größe eines auf dem besagten Datenkanal (210, 220, 230, 240) übertragbaren Datentransportblocks den folgenden Schritt umfasst:
Empfangen einer Angabe über einen mit dem Senden von Daten auf dem besagten Datenkanal (210, 220, 230, 240) dieses Trägers (110, 120, 130, 140) assoziierten maximalen potenziellen Datendurchsatz.

6. Verfahren nach Anspruch 5, wobei der Schritt des Empfangens einer Angabe über die potenzielle Größe eines auf dem besagten Datenkanal übertragbaren Datentransportblocks den folgenden Schritt umfasst:
Empfangen einer Angabe über einen mit dem Senden von Daten auf dem besagten Datenkanal (210, 220, 230, 240) dieses Trägers (110, 120, 130, 140) assoziierten maximalen potenziellen Datendurchsatz
Berechnen einer geschätzten Leistungszuweisung, welche erforderlich ist, um dem geschätzten maximalen potenziellen Datendurchsatz auf dem besagten Datenkanal (110, 120, 130, 140) dieses Trägers zu entsprechen, und
Bestimmen, in welchem Ausmaß die berechnete geschätzte Leistungszuweisung, welche erforderlich ist, um dem geschätzten maximalen potenziellen Datendurchsatz zu entsprechen, durch die zwischen einem jeden der besagten Träger (110, 120, 130, 140) zuweisbare Leistung gefüllt werden kann.

7. Verfahren nach einem beliebigen der vorstehenden Ansprüche, wobei das Zuweisen von Leistung an den Datenkanal (210, 220, 230, 240) eines jeden Trägers (110, 120, 130, 140) gemäß einer geplanten Trägerfüllreihenfolge nach dem Pseudozufallsverfahren zwischen denjenigen Trägern (110, 120, 130, 140), für welche die erzeugten Werte identisch sind, erfolgt.

8. Verfahren nach einem beliebigen der vorstehenden Ansprüche, wobei die Schritte periodisch wiederholt werden.

9. Verfahren gemäß Anspruch 8, wobei die besagte Periode pseudozufällig ist.

10. Benutzerendgerät (44), welches betreibbar ist, um einem Datenkanal (210, 220, 230, 240) in einem drahtlosen Mehrträger-Telekommunikationsnetzwerk Leistung zuzuweisen, wobei jeder Träger (110, 120, 130, 140) mindestens einen der besagten Datenkanäle (210, 220, 230, 240) umfasst, wobei das besagte Benutzerendgerät umfasst:
Eine Quelle (180) der zwischen einem jeden der besagten Träger zuweisbaren Leistung;
Überwachungslogik (430), welche betreibbar ist, um eine Angabe zu empfangen, die für einen mit dem Senden von Daten auf dem besagten Datenkanal eines jeden Trägers assoziierten geschätzten Leistungsbedarf repräsentativ ist;
Überwachungslogik (430), welche betreibbar ist, um eine Angabe zu empfangen, die für einen mit dem Senden von Daten auf dem besagten Datenkanal eines jeden Trägers assoziierten geschätzten Datendurchsatz repräsentativ ist;
Rechenlogik (440), welche betreibbar ist, um ausgehend von einem Verhältnis des geschätzten Datendurchsatzes zu dem geschätzten Leistungsbedarf einen Wert für den besagten Datenkanal eines jeden Trägers zu erzeugen, welcher für einen geschätzten potenziellen Datendurchsatz pro Einheit der dem besagten Datenkanal eines jeden Trägers zugewiesenen Leistung repräsentativ ist, und
Umsetzungslogik (450), welche betreibbar ist, um dem Datenkanal eines jeden Trägers Leistung gemäß einer auf der Basis eines Vergleichs der erzeugten Werte bestimmten geplanten Trägerfüllreihenfolge zuzuweisen, wobei der Träger (110, 120, 130, 140) mit dem größten erzeugten Wert zuerst für das Füllen geplant wird, und wobei der Träger mit dem kleinsten erzeugten Wert zuletzt für das Füllen geplant wird, bis die gesamte Leistung zugewiesen worden ist.

11. Basisstation (22), welche betreibbar ist, um einem Datenkanal (210, 220, 230, 240) in einem drahtlosen Mehrträger-Telekommunikationsnetzwerk Leistung zuzuweisen, wobei jeder Träger (110, 120, 130, 140) mindestens einen der besagten Datenkanäle umfasst, wobei die besagte Basisstation (22) umfasst:
Eine Quelle der zwischen einem jeden der besagten Träger zuweisbaren Leistung;
Überwachungslogik, welche betreibbar ist, um eine Angabe zu empfangen, die für einen mit dem Senden von Daten auf dem besagten Datenkanal eines jeden Trägers assoziierten geschätzten Leistungsbedarf repräsentativ ist;
Überwachungslogik, welche betreibbar ist, um eine Angabe zu empfangen, die für einen mit dem Senden von Daten auf dem besagten Datenkanal eines jeden Trägers assoziierten geschätzten Datendurchsatz repräsentativ ist;
Rechenlogik, welche betreibbar ist, um ausgehend von einem Verhältnis des geschätzten Datendurchsatzes zu dem geschätzten Leistungsbedarf einen Wert für den besagten Datenkanal eines jeden Trägers zu erzeugen, welcher für einen geschätzten potenziellen Datendurchsatz pro Einheit der dem besagten Datenkanal eines jeden Trägers zugewiesenen Leistung repräsentativ ist, und
Umsetzungslogik, welche betreibbar ist, um dem Datenkanal eines jeden Trägers Leistung gemäß einer auf der Basis eines Vergleichs der erzeugten Werte bestimmten geplanten Trägerfüllreihenfolge zuzuweisen, wobei der Träger mit dem größten erzeugten Wert zuerst für das Füllen geplant wird, und wobei der Träger mit dem kleinsten erzeugten Wert zuletzt für das Füllen geplant wird, bis die gesamte Leistung zugewiesen worden ist.

12. Computerprogramm-Produkt, welches betreibbar ist, um bei dessen Ausführung auf einem Computer die Verfahrensschritte eines beliebigen der Ansprüche 1 bis 9 durchzuführen.

## Revendications

1. Procédé d'attribution de puissance à un canal de données (210, 220, 230, 240) dans un réseau de télécommunication sans fil multiporteuse, chaque porteuse (110, 120, 130, 140) comprenant au moins un desdits canaux de données, ledit procédé comprenant les étapes suivantes :
déterminer une puissance pouvant être attribuée entre chacune desdites porteuses (110, 120, 130, 140) ;
pour chaque porteuse :
recevoir (310) une indication représentative d'une puissance nécessaire estimée associée à l'envoi de données sur ledit canal de données de cette porteuse ;
recevoir une indication représentative d'un débit de données estimé associé à l'envoi de données sur ledit canal de données de cette porteuse ;
générer (320), à partir d'un rapport entre le débit de données estimé et la puissance nécessaire estimée, une valeur, pour ledit canal de données de cette porteuse, représentative d'un débit potentiel estimé de données par unité de puissance attribuée audit canal de données de cette porteuse, et
attribuer une puissance (350) au canal de données de chaque porteuse conformément à un ordre de remplissage de porteuse planifié déterminé sur la base d'une comparaison (330) des valeurs générées, la porteuse ayant la plus grande valeur générée étant planifiée pour être remplie en premier, la porteuse ayant la plus faible valeur générée étant planifiée pour être remplie en dernier, jusqu'à ce que toute la puissance soit attribuée.

2. Procédé selon la revendication 1, dans lequel chaque porteuse (110, 120, 130, 140) comprend en outre un canal pilote et l'indication représentative d'une puissance nécessaire estimée associée à l'envoi de données sur ledit canal de données (210, 220, 230, 240) de cette porteuse est déterminée à partir d'un niveau de puissance pré-attribué audit canal pilote.

3. Procédé selon la revendication 1 ou la revendication 2, dans lequel l'indication représentative d'un débit de données estimé associé à l'envoi de données sur ledit canal de données (210, 220, 230, 240) de cette porteuse (110, 120, 130, 140) comprend une indication d'une taille de bloc de transport de données potentielle pouvant être transmise sur ledit canal de données (210, 220, 230, 240).

4. Procédé selon la revendication 1 ou la revendication 2, dans lequel l'indication représentative d'un débit de données estimé associé à l'envoi de données sur ledit canal de données (210, 220, 230, 240) de cette porteuse (110, 120, 130, 140) comprend une indication d'un rapport signal sur bruit subi sur cette porteuse (110, 120, 130, 140) par ledit réseau de télécommunication sans fil.

5. Procédé selon la revendication 3, dans lequel l'étape de réception d'une indication d'une taille de bloc de transport de données potentielle pouvant être transmise sur ledit canal de données (210, 220, 230, 240) comprend l'étape suivante :
recevoir une indication d'un débit de données potentiel maximum associé à l'envoi de données sur ledit canal (210, 220, 230, 240) de cette porteuse (110, 120, 130, 140).

6. Procédé selon la revendication 5, dans lequel l'étape de réception d'une indication d'une taille de bloc de transport de données potentielle pouvant être transmise sur ledit canal de données comprend les étapes suivantes :
recevoir une indication de débit de données potentiel maximum associé à l'envoi de données sur ledit canal de données (210, 220, 230, 240) de cette porteuse (110, 120, 130, 140), calculer une attribution estimée requise pour correspondre au débit de données potentiel maximum estimé sur ledit canal de données (110, 120, 130, 140) de cette porteuse, et
déterminer le degré de remplissage de l'attribution de puissance estimée calculée, requise pour correspondre au débit de données potentiel maximum estimé, par la puissance pouvant être attribuée entre chacune desdites porteuses (110, 120, 130, 140).

7. Procédé selon l'une quelconque des revendications précédentes, dans lequel l'attribution de puissance au canal de données (210, 220, 230, 240) de chaque porteuse (110, 120, 130, 140) conformément à un ordre de remplissage de porteuse planifié est pseudo-aléatoire entre ces porteuses (110, 120, 130, 140) pour lesquelles les valeurs générées sont identiques.

8. Procédé selon l'une quelconque des revendications précédentes, dans lequel les étapes sont répétées périodiquement.

9. Procédé selon la revendication 8, dans lequel ladite période est pseudo-aléatoire.

10. Équipement utilisateur (44) permettant d'attribuer une puissance à un canal de données (210, 220, 230, 240) dans un réseau de télécommunication sans fil multiporteuse, chaque porteuse (110, 120, 130, 140) comprenant au moins un desdits canaux de données (210, 220, 230, 240), ledit équipement utilisateur comprenant :
une source de puissance (180) pouvant être attribuée entre chacune desdites porteuses ;
une logique de surveillance (430) permettant de recevoir une indication représentative d'une puissance nécessaire estimée associée à l'envoi de données sur ledit canal de données de chaque porteuse ; une logique de surveillance (430) permettant de recevoir une indication représentative d'un débit de données estimé associé à l'envoi de données sur ledit canal de données de chaque porteuse ;
une logique de calcul (440) permettant de générer, à partir d'un rapport entre le débit de données estimé et la puissance nécessaire estimée, une valeur, pour ledit canal de données de chaque porteuse, représentative d'un débit potentiel estimé de données par unité de puissance attribuée audit canal de données de chaque porteuse, et
une logique de mise en oeuvre (450) permettant d'attribuer une puissance au canal de données de chaque porteuse conformément à un ordre de remplissage de porteuse planifié déterminé sur la base d'une comparaison des valeurs générées, la porteuse (110, 120, 130, 140) ayant la plus grande valeur générée étant planifiée pour être remplie en premier, la porteuse ayant la plus faible valeur générée étant planifiée pour être remplie en dernier, jusqu'à ce que toute la puissance soit attribuée.

11. Station de base (22) permettant d'attribuer une puissance à un canal de données (210, 220, 230, 240) dans un réseau de télécommunication sans fil multiporteuse, chaque porteuse (110, 120, 130, 140) comprenant au moins un desdits canaux de données, ladite station de base (22) comprenant :
une source de puissance pouvant être attribuée entre chacune desdites porteuses ;
une logique de surveillance permettant de recevoir une indication représentative d'une puissance nécessaire estimée associée à l'envoi de données sur ledit canal de données de chaque porteuse ;
une logique de surveillance permettant de recevoir une indication représentative d'un débit de données estimé associé à l'envoi de données sur ledit canal de données de chaque porteuse ;
une logique de calcul permettant de générer, à partir d'un rapport entre le débit de données estimé et la puissance nécessaire estimée, une valeur, pour ledit canal de données de chaque porteuse, représentative d'un débit potentiel estimé de données par unité de puissance attribuée audit canal de données de chaque porteuse, et
une logique de mise en oeuvre permettant d'attribuer une puissance au canal de données de chaque porteuse conformément à un ordre de remplissage de porteuse planifié déterminé sur la base d'une comparaison des valeurs générées, la porteuse ayant la plus grande valeur générée étant planifiée pour être remplie en premier, la porteuse ayant la plus faible valeur générée étant planifiée pour être remplie en dernier, jusqu'à ce que toute la puissance soit attribuée.

12. Produit de programme informatique permettant, lorsqu'il est exécuté sur un ordinateur, d'exécuter les étapes du procédé selon l'une quelconque des revendications 1 à 9.
